# FASCICULE DE BREVET EUROPEEN

(11) **EP 0 986 578 B1**
(45) Date de publication et mention de la délivrance du brevet: **06.03.2002**
(21) Numéro de dépôt: 98917272.1
(22) Date de dépôt: 31.03.1998
(51) Int. Cl.: C08B 30/02, C08B 30/04, D21H 17/28

(54) **COMPOSITION COMPRENANT DE LA FARINE ET SON APPLICATION A LA FABRICATION DU PAPIER**
MEHL ENTHALTENDE ZUSAMMENSETZUNG UND IHRE VERWENDUNG ZUR PAPIERHERSTELLUNG
COMPOSITION CONTAINING FLOUR AND APPLICATION THEREOF FOR MAKING PAPER

(30) Priorité: 01.04.1997 FR 9703952
(43) Date de publication de la demande: 22.03.2000
(73) Titulaire: Tristant Jean Michel S.A., 08250 Grandpre (FR)
(72) Inventeur: TRISTANT, Jean-Michel, F-08250 Grandpré (FR)
(74) Mandataire: Debay, Yves
(86) Numéro de dépôt international: FR9800645
(87) Numéro de publication internationale: WO9844002

(56) Documents cités:
- FR-A- 1 422 395

## Description

La présente invention concerne une composition à base de farine, cette composition étant destinée à être mise en dispersion aqueuse et utilisée lors de la fabrication de papier, notamment à partir de papier recyclé.

L'objet de cette farine est de recharger en amidon les papiers réalisés à partir de papiers recyclés qui ne contiennent plus de fibres. Le papetier recherche un amidon polymérisable.

On utilise déjà en papeterie de l'amidon au cours de la fabrication du papier. Cet amidon peut être introduit avant la caisse de tête, dans le mélange de fibres de cellulose et d'eau, pour servir de liant. Il peut aussi être déposé sur le tapis de fibres de cellulose, après essorage de l'eau et avant passage entre les rouleaux compresseurs et les rouleaux sécheurs.

L'amidon est une substance végétale de réserve contenue dans les graines de céréales comme le blé, le maïs, le riz, le manioc, de légumineuses, dans les pommes de terre, etc. Leur teneur dans les graines varie de 40 à 70 %. Il se présente en grains microscopiques de dimensions et de formes variables suivant leur origine végétale. L'amidon est comme la cellulose, un polyholoside. Le motif élémentaire est l'alpha glucose et la structure de l'amidon est très ramifiée. Dans les graines, se trouvent en outre des protéines comme le gluten. La farine de blé comporte donc des glucides 80 % d'amidon, 12 % de protéines comme le gluten.

Lorsque la farine est utilisée pour faire du pain, le raffermissement de la pâte est dû à un accroissement des liaisons entre les chaînes protéiques du gluten par suite d'une transformation par oxydation de la cystéine en cystine. Le gluten joue un rôle essentiel dans la fabrication du pain, car le réseau glutinique enferme le CO₂ qui provient de la fermentation. S'il n'y a pas de réseau glutinique, les bulles ne sont plus enfermées.

Lorsque l'amidon est utilisé pour la papeterie, on souhaite un amidon dépourvu de gluten car celui-ci augmente la viscosité de la composition aqueuse d'amidon et provoque des tâches sur le papier. Pour séparer l'amidon du gluten, on utilise actuellement deux techniques : la dégradation enzymatique du gluten, avec élévation de température et la turbo-séparation. Les granules d'amidon et de gluten n'ont pas la même taille ni le même poids, ni la même densité et par turbulence, on fait une séparation du gluten. Les enzymes protéases sont coûteuses ainsi que la séparation par turbulence.

On a décrit dans le document FR-A-2 732 036 un procédé de production de pâtes d'amidon ayant une viscosité contrôlée en ajoutant une protéase à l'amidon qui a été précuit par des moyens enzymatiques ou thermochimiques. Un tel amidon est utilisé en papeterie.

Dans le document US No. 3 753 857, on a décrit un procédé de préparation d'amidon à partir de blé ou de maïs en soumettant une suspension d'amidon à 30-40 °C, en ajustant le pH à 3-3,5 et en ajoutant une enzyme protéinase dans les quantités de 0,013 à 0,026 %, en faisant réagir pendant 12 heures et plus, puis en ajustant le pH à 5,5-6 et en ajoutant 3,0 à 4,0 % en poids d'un phosphate monobasique, en réajustant le pH à 5,5-6 et en séchant. On obtient un amidon qui est utilisé en papeterie et qui permet d'améliorer la résistance au déchirement et à l'éclatement du papier, ainsi que son opacité.

On a décrit dans le document EP-A-144 602 un procédé de séparation du gluten comprenant les étapes de séparation par centrifugation à contre courant.

Dans le document EP-A-397 704, on a décrit un procédé de dénaturation du gluten comprenant le traitement de gluten sec ou humide sous des conditions acides à un pH inférieur à 5, en laissant le gluten acidifié à 10-40 °C pendant 1 minute ou plus. On obtient un gluten qui a une capacité émulsifiante supérieure à 10, une solubilité améliorée une capacité améliorée à retenir l'eau et qui forme des mousses stables.

Tous ces procédés qui permettent de dénaturer le gluten ou de séparer le gluten de l'amidon sont coûteux.

En papeterie, on est dans l'obligation d'utiliser de l'amidon qui a été traité de façon qu'il soit le plus pur possible. Or, on utilise de grandes quantités d'amidon pour fabriquer le papier. Cette matière première est donc chère. On souhaite donc utiliser de la farine plutôt que de l'amidon. Le papetier recherche un amidon polymérisable. Quand on utilise de la farine à la place de l'amidon, le problème est la présence du gluten. Dans 100 g de farine (taux d'humidité courant) il y a 30 g de gluten humide et si on ajoute de l'eau à la farine, le gluten se forme en un réseau gluténique que l'on ne peut pas dissoudre et qui pose des problèmes dans la machine à papier, notamment sur les tapis, les rouleaux et qui les encrasse.

L'invention a donc pour but de fournir une farine qui puisse être utilisée en papeterie.

Un autre but de l'invention est de fournir un procédé de fabrication d'une farine qui ne contienne pas de gluten, ce procédé étant rapide et bon marché.

Un autre but de l'invention est de fournir un procédé de fabrication de papier, notamment de papier recyclé, en utilisant une farine sans gluten.

A cet effet, l'invention concerne une composition d'amidon ayant une viscosité contrôlée lorsqu'elle est mise en suspension aqueuse, comprenant une farine et un composé soufré comme le dioxyde de soufre ou le sulfite, par exemple un monosulfite ou un bisulfite de métal alcalin, par exemple un monosulfite de sodium. L'invention est remarquable du fait que l'addition d'oxyde de soufre ou de dioxyde de soufre ou de sulfite aux farines alimentaires est interdite du fait de leur nocivité.

La composition selon l'invention comprend de préférence 100 kg de farine et 100 g de sulfite de sodium. De préférence, la composition comprend en outre 2,5 g d'une enzyme contrôlant la gélification des pentosènes. Les pentosènes sont des protéines qui se gélifient. On contrôle la gélification des pentosènes par des enzymes telles que la xylanase 5000 vendue dans le commerce par la société GIST-BROCADES (ROISSY, France) et la fermizyne vendue par la même société.

L'invention est remarquable du fait que les produits soufrés qui sont rajoutés à la farine détruisent les ponts disulfurés du gluten. Du fait de la rupture de ces ponts disulfurés, le gluten ne peut plus former de réseau. Le gluten est dénaturé et lorsqu'on rajoute de l'eau à la composition selon l'invention, le gluten ne peut former de réseau qui augmenterait la viscosité de la suspension aqueuse de farine.

La présente invention concerne en outre un procédé de fabrication de papier. De manière connue, on introduit une suspension aqueuse de fibres de cellulose dans une caisse de tête d'une machine à papier, on dépose la suspension sur une grille, par exemple une grille d'une machine à papier Fourdrinier, on essore le tapis de fibres par gravitation, on presse le tapis de fibres par des rouleaux presseurs et on sèche le tapis de fibres par passage entre des rouleaux sécheurs. Le procédé selon l'invention est tel qu'on mélange la composition selon l'invention avec de l'eau pour la mettre en suspension, on pulvérise la suspension aqueuse sur le tapis de fibres humides, avant les rouleaux presseurs.

Si on pulvérise un amidon obtenu selon la technique antérieure, à savoir ayant été traité par des enzymes ou par turbo séparation, les tapis et les rouleaux de la machine à papier sont encrassés, malgré des agitateurs qui homogénéisent la suspension d'amidon. En effet, l'amidon contient encore un peu de gluten qui augmente la viscosité de la suspension d'amidon. Le traitement par enzymes selon la technique antérieure donne de bons résultats, mais est couteux, tandis que le traitement par turbo séparation est couteux et pau satisfaisant.

Selon l'invention, on pulvérise la composition aqueuse contenant de l'amidon, par exemple, sous forme de farine entière et de sulfite de sodium, à l'aide d'une rampe munie de buses, et ce à température ambiante. On règle les buses de façon à éviter la formation de mousse.

Selon l'invention, les fibres de cellulose qui sont mises en suspension sont des fibres provenant de papier recyclé. On sait que de plus en plus, on récupère les vieux papiers, on leur fait subir un traitement pour enlever l'encre et les autres composants entrant dans la composition du papier, puis on récupère les fibres de cellulose que l'on introduit en caisse de tête. Ainsi, ces vieux papiers qui sont réutilisés permettent de protéger les forêts, notamment les forêts de feuillus tels que chênes, bouleaux, frênes qui sont coupés pour fabriquer de la pâte à papier pour papiers de luxe. De plus, les feuillus poussent lentement et donc ils sont plus rares que les pins ou sapins ou même l'eucalyptus qui pousse très vite.

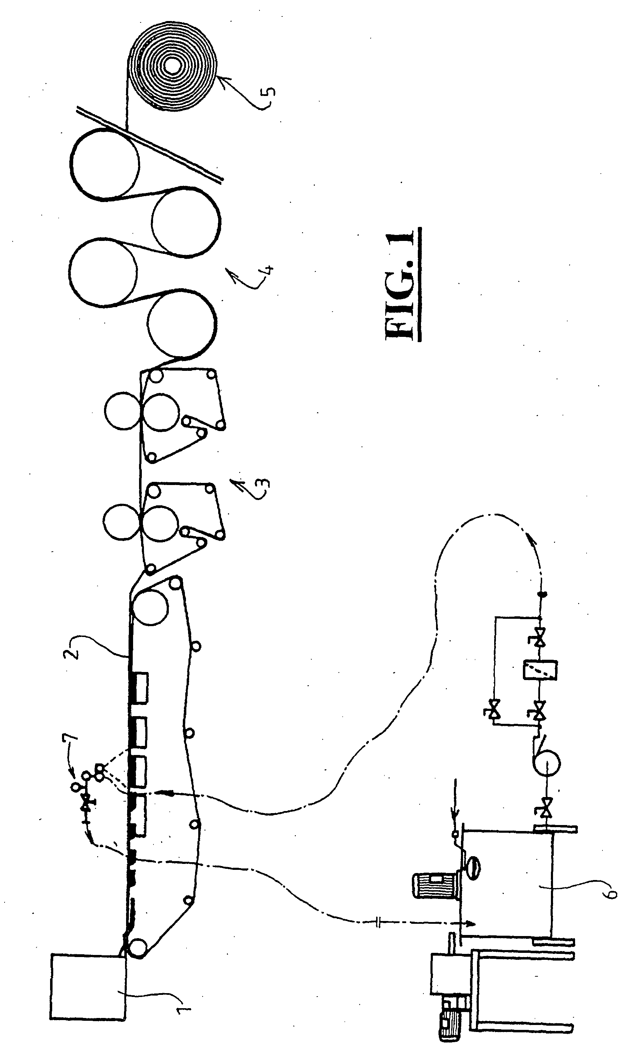

La description suivante, en regard du dessin annexé à titre d'exemple non limitatif permettra de comprendre comment l'invention peut être mise en pratique.

La Figure unique est une vue schématique d'une machine à papier utilisant la composition selon l'invention.

La machine à papier comporte, de manière connue, une caisse de tête 1. Dans cette caisse de tête parvient la suspension aqueuse de fibres de cellulose, cette suspension pouvant contenir des charges minérales, de l'oxyde de titane pour lui conférer de la blancheur, des liants et autres composés traditionnellement utilisés en papeterie. La machine comprend une toile 2 qui le plus souvent est horizontale. Cette toile reçoit la suspension de fibres, et par gravité, l'eau s'égoutte et le tapis de fibres est ensuite pressé en passant entre des rouleaux presseurs 3, l'eau étant alors fortement exprimée. Puis, le tapis de fibres passe entre des rouleaux sécheurs 4 qui sont à température élevée et qui permettent d'obtenir le degré d'humidité souhaité du papier terminé. Enfin le papier est enroulé pour former un rouleau 5 de plusieurs tonnes.

Par exemple, la composition est proportionnée à 1 %, c'est-à-dire 1 kg de mélange concentré pour 100 kg de farine. Mais la composition peut être proportionnée à moins ou plus de 1 %. Par exemple, si la composition est proportionnées à 2 %, on a 2 kg de concentré pour 98 kg de farine.

Selon l'invention, la composition peut-être préparée à partir d'un mélange concentré contenant 10 kg de sulfite, 89,75 kg de farine et 250 g d'enzymes, le mélange concentré étant mélangé dans une proportion déterminée avec la farine.

Selon l'invention, on mélange intimement, par agitation 89,75 kg le farine de céréale, de préférence de blé, avec 10 kg de sulfite de sodium NaHSO₃. On rajoute éventuellement 250 g d'enzyme réglant la viscosité du pentosène.

Cette composition peut être fabriquée à sec et vendue sous forme de poudre.

On introduit la composition selon l'invention dans un bac 6 et on la mélange avec de l'eau. De préférence, on mélange 1 kg de la composition avec 1 tonne d'eau (mélange à 1 pour 1000). Puis, par une rampe 7 placée au-dessus du tapis de fibres, on pulvérise la composition en suspension aqueuse sur le tapis de fibres. On obtient un papier ayant un bel aspect. Les rouleaux et les tapis de la machine à papier ne sont pas encrassés.

Avantageusement, l'introduction du composé soufré, par exemple des sulfites, dans la farine s'effectue par l'intermédiaire d'une solution aqueuse dans laquelle est dissoute la proportion de composé soufré, et éventuellement d'enzymes, correspondant à la composition selon l'invention. Cette adjonction du composé soufré par l'intermédiaire d'une solution aqueuse permet une meilleure efficacité du composé soufré et donc un taux de gluten dénaturé plus important.

Il est possible de mélanger la composition avec l'eau dans la proportion de 2 pour 1, (100 g de composé pour 50 g d'eau) jusqu'à, par exemple, une proportion de 1 pour 1000 (1 kg de composé pour 1 tonne d'eau), la proportion d'eau étant déterminée pour avoir un mélange plus ou moins pâteux ou plus ou moins liquide.

Par exemple, on mélange la composition dans une quantité de 100 g de composé pour un litre d'eau.

On peut utiliser des fibres de cellulose provenant de papier recyclé.

On peut aussi éventuellement utiliser la composition selon l'invention dans une « sauce» de couchage, à savoir une suspension contenant la composition selon l'invention et de l'oxyde de titane. Le couchage a pour but de rendre la surface du papier moins poreuse et de transformer la macro porosité superficielle du papier en micro porosité contrôlée.

On peut utiliser du monosulfite ou du bisulfite ou SO₂ pour dénaturer le gluten. Dans le cas où on utilise le dioxyde de soufre, on fait passer un courant de ce gaz dans la farine. Ce courant peut être introduit sur lit fluidisé de la farine.

## Revendications

1. Composition d'amidon, **caractérisée en ce qu'**elle comprend une farine traitée par un composé soufré soluble dans l'eau, dans des proportions déterminées pour contrôler la viscosité de la composition lorsqu'elle est mise en suspension aqueuse.

2. Composition selon la revendication 1, **caractérisée en ce que** le composé soufré est choisi parmi le dioxyde de soufre, un monosulfite ou un bisulfite d'un métal alcalin, de préférence un sulfite de sodium.

3. Composition selon l'une des revendications précédentes, **caractérisée en ce qu'**elle contient 100 kg de farine et 100 g de sulfite de sodium et éventuellement 2,5 g d'une enzyme contrôlant la gélification des pentosènes.

4. Composition selon la revendication 3, **caractérisée en ce qu'**elle est préparée à partir d'un mélange concentré contenant 10 kg de sulfite, 89,75 kg de farine et 250 g d'enzymes, ledit concentré étant mélangé dans une proportion déterminée avec de la farine.

5. Composition selon la revendication 3, **caractérisée en ce que** la proportion est à 1 %, c'est-à-dire 1 kg de concentré pour 99 kg de farine.

6. Procédé de fabrication de papier dans lequel on introduit une suspension aqueuse de fibres de cellulose dans une caisse de tête d'une machine à papier, on dépose la suspension sur une grille (2), on essore le tapis de fibres par gravitation, on presse le tapis de fibres par des rouleaux presseurs (3) et on sèche le tapis de fibres par passage entre des rouleaux sécheurs (4), **caractérisé en ce qu'**on mélange la composition selon l'une des revendications précédentes avec de l'eau pour la mettre en suspension, on pulvérise la suspension aqueuse sur le tapis de fibres humides, avant les rouleaux presseurs.

7. Procédé selon la revendication 6, **caractérisé en ce qu'**on mélange la composition avec l'eau dans une quantité comprise entre 2 pour 1 (100 g de composition pour 50 g d'eau), et 1 pour 1000 l d'eau.

8. Procédé selon la revendication 7, **caractérisé en ce qu'**on mélange la composition dans une quantité de 100 g de composition pour un litre d'eau.

9. Procédé selon l'une quelconque des revendications 6 ou 8, **caractérisé en ce qu'**on pulvérise la composition aqueuse contenant de l'amidon et du sulfite de sodium, sur le tapis de fibres, entre la caisse de tête (1) et les rouleaux presseurs (3), à l'aide d'une rampe (7) munie de buses, et à température ambiante.

10. Procédé selon l'une des revendications 6 à 9, **caractérisé en ce que** les fibres de cellulose qui sont mises en suspension sont des fibres provenant de papier recyclé.

11. Procédé de fabrication de papier dans lequel on introduit une suspension aqueuse de fibre de cellulose dans une caisse de tête d'une machine à papier, on dépose la suspension sur une grille (2), on essore le tapis de fibres par gravitation, on presse le tapis de fibres par des rouleaux presseurs (3) et on sèche le tapis de fibres par passage entre des rouleaux sécheurs (4),
**caractérisé en ce que** la proportion de composé soufré de la composition selon l'une des revendications 1 à 5 est dissoute dans de l'eau, la solution aqueuse ainsi obtenue étant ensuite mélangée à la farine pour former une suspension aqueuse pulvérisée ensuite sur le tapis de fibres humides, avant les rouleaux presseurs (3).

## Patentansprüche

1. Zusammensetzung aus Stärke, **dadurch gekennzeichnet, daß** sie mit einer wasserlöslichen Schwefelverbindung behandeltes Mehl in Mengen enthält, die dazu bestimmt sind, die Viskosität der Zusammensetzung zu steuern, wenn diese in die Form einer wäßrigen Suspension gebracht wird.

2. Zusammensetzung nach Anspruch 1, **dadurch gekennzeichnet, daß** die Schwefelverbindung ausgewählt ist aus Schwefeldioxid, einem Monosulfit oder Bisulfit eines Alkalimetalls und vorzugsweise ein Natriumsulfit ist.

3. Zusammensetzung nach einem der vorangehenden Ansprüche, **dadurch gekennzeichnet, daß** sie 100 kg Mehl und 100 g Natriumsulfit und gegebenenfalls 2,5 g eines Enzyms enthält, das das Gelieren von Pentosanen steuert.

4. Zusammensetzung nach Anspruch 3, **dadurch gekennzeichnet, daß** sie aus einer konzentrierten Mischung zubereitet wird, die 10 kg Sulfit, 89,75 kg Mehl und 250 g Enzyme enthält, wobei das Konzentrat in einem vorgegebenen Anteil mit dem Mehl vermischt wird.

5. Zusammensetzung nach Anspruch 3, **dadurch gekennzeichnet, daß** der Anteil 1% beträgt, d.h. 1 kg Konzentrat auf 99 kg Mehl.

6. Verfahren zur Herstellung von Papier, bei dem eine wäßrige Suspension von Zellulosefasern in einen Stoffauflaufkasten einer Papiermaschine eingeführt und auf ein Gitter (2) gelegt wird, die Fasermatte durch Schwerkraft getrocknet, durch Preßwalzen (3) gepreßt und beim Durchlauf zwischen Trocknerwalzen (4) getrocknet wird, **dadurch gekennzeichnet, daß** die Zusammensetzung gemäß einem der vorangehenden Ansprüche mit Wasser vermischt wird, um sie in Suspension zu bringen, und die wäßrige Suspension vor den Preßwalzen auf die feuchte Fasermatte gesprüht wird.

7. Verfahren nach Anspruch 6, **dadurch gekennzeichnet, daß** die Zusammensetzung mit Wasser in einem Verhältnis von 2 : 1 (100g Zusammensetzung auf 50 g Wasser) bis 1 : 1000 1 Wasser vermischt wird.

8. Verfahren nach Anspruch 7, **dadurch gekennzeichnet, daß** die Zusammensetzung in einer Menge von 100 g Zusammensetzung auf einen Liter Wasser vermischt wird.

9. Verfahren nach einem der Ansprüche 6 bis 8, **dadurch gekennzeichnet, daß** die Stärke und Natriumsulfit enthaltende wäßrige Zusammensetzung auf die Fasermatte zwischen dem Stoffauflaufkasten (1) und den Preßwalzen (3) mit Hilfe einer mit Düsen versehenen Rampe (7) und bei Umgebungstemperatur gesprüht wird.

10. Verfahren nach einem der Ansprüche 6 bis 9, **dadurch gekennzeichnet, daß** die in Suspension gebrachten Zellulosefasern aus Altpapier stammen.

11. Verfahren zur Herstellung von Papier, bei dem eine wäßrige Suspension von Zellulosefasern in einen Stoffauflaufkasten einer Papiermaschine eingeführt und auf ein Gitter (2) gelegt wird, die Fasermatte durch Schwerkraft getrocknet, durch Preßwalzen (3) gepreßt und beim Durchlauf zwischen Trocknerwalzen (4) getrocknet wird, **dadurch gekennzeichnet, daß** der Anteil der Schwefelverbindung an der Zusammensetzung gemäß einem der Ansprüche 1 bis 5 in Wasser gelöst wird, die so erhaltene wäßrige Lösung anschließend mit Mehl vermischt wird, um eine wäßrige Suspension zu bilden, die dann vor den Preßwalzen (3) auf die feuchte Fasermatte gesprüht wird.

## Claims

1. Starch composition, **characterized in that** it comprises a flour treated with a water-soluble sulfur-containing compound, under given proportions to control the viscosity of the composition when it is made into an aqueous suspension.

2. Composition according to Claim 1, **characterized in that** the sulfur-containing compound is chosen from sulfur dioxide and an alkali metal monosulfite or bisulfite, preferably a sodium sulfite.

3. Composition according to either of the preceding claims, **characterized in that** it contains 100 kg of flour and 100 g of sodium sulfite and optionally 2.5 g of an enzyme for controlling the gelation of pentosans.

4. Composition according to Claim 3, **characterized in that** it is prepared from a concentrated mixture containing 10 kg of sulfite, 89.75 kg of flour and 250 g of enzymes, the said concentrate being mixed in a given proportion with flour.

5. Composition according to Claim 3, **characterized in that** the proportion is 1%, that is to say 1 kg of concentrate per 99 kg of flour.

6. Papermaking process in which an aqueous suspension of cellulose fibres is introduced into a flow box of a paper machine, the suspension is placed on a grate (2), the carpet of fibres is drained by gravity, the carpet of fibres is pressed with holding-down rolls (3) and the carpet of fibres is dried by passing it between drying rolls (4), **characterized in that** the composition according to one of the preceding claims is mixed with water to make it into a suspension and the aqueous suspension is sprayed onto the carpet of wet fibres, before the holding-down rolls.

7. Process according to Claim 6, **characterized in that** the composition is mixed with the water in an amount of between 2 per 1 (100 g of composition per 50 g of water) and 1 per 1000 1 of water.

8. Process according to Claim 7, **characterized in that** the composition is mixed in an amount of 100 g of composition per one litre of water.

9. Process according to either of Claims 6 to 8, **characterized in that** the aqueous composition containing starch and sodium sulphite is sprayed onto the carpet of fibres, between the flow box (1) and the holding-down rolls (3), using a ramp (7) fitted with nozzles, and at ambient temperature.

10. Process according to one of Claims 6 to 9, **characterized in that** the cellulose fibres which are made into a suspension are fibres obtained from recycled paper.

11. Papermaking process in which an aqueous suspension of cellulose fibres is introduced into a flow box of a paper machine, the suspension is placed on a grate (2), the carpet of fibres is drained by gravity, the carpet of fibres is pressed with holding-down rolls (3) and the carpet of fibres is dried by passing it between drying rolls (4), **characterized in that** the proportion of sulfur-containing compound in the composition according to one of Claims 1 to 5 is dissolved in water, the aqueous solution thus obtained then being mixed with the flour to form an aqueous suspension which is then sprayed onto the carpet of wet fibres, before the holding-down rolls (3).
